# EUROPÄISCHE PATENTSCHRIFT

(11) **EP 0 535 295 B1**
(45) Veröffentlichungstag und Bekanntmachung des Hinweises auf die Patenterteilung: **26.06.1996**
(21) Anmeldenummer: 92104280.0
(22) Anmeldetag: 12.03.1992
(51) Int. Cl.: F04C 13/00, F04C 2/08, F04C 15/00

(54) **Einrichtung zur Verarbeitung von hochviskosem Kautschuk oder thermoplastischem Kunststoff**
Device for the treatment of highly viscous rubber or thermoplastic synthetic material
Dispositif pour le traitement de caoutchouc ou de matière synthétique thermoplastique hautement visqueux

(30) Priorität: 12.09.1991 DE 4130312
(43) Veröffentlichungstag der Anmeldung: 07.04.1993
(73) Patentinhaber: HERMANN BERSTORFF Maschinenbau GmbH, D-30627 Hannover (Kleefeld) (DE)
(72) Erfinder: Capelle, Gerd, Dipl.-Ing., W-3012 Langenhagen 6 (DE)

(56) Entgegenhaltungen:
- DE-U- 8 814 087
- FR-A- 1 277 608
- GB-A- 1 152 326
- US-A- 2 540 235
- US-A- 3 072 066
- US-A- 4 439 120

## Beschreibung

Die Erfindung betrifft eine Pumpeneinrichtung gemäß dem Oberbegriff von Anspruch 1.

Aus der DE-PS 36 15 830 ist eine gattungsgemäße Einrichtung bekannt.

Wenn hochviskose Materialien, wie bestimmte Kautschuksorten, mit einer derartigen Einrichtung verarbeitet werden sollen, entstehen erhebliche radiale Abdichtungsprobleme hinsichtlich der Stirnseiten der Zahnräder, die dazu geführt haben, daß die Verarbeitung derartiger temperaturempfindlicher Werkstoffe mit zahnradpumpenähnlichen Einrichtungen bisher nicht durchgeführt wurde.

Die Abdichtung der Stirnflächen der Zahnräder zum Gehäuse in radialer Richtung herunter bis auf die Welle der Zahnräder gestaltet sich über Gebühr schwierig. Wenn temperaturempfindlicher Kautschuk gefördert werden soll, muß sichergestellt sein, daß sich nirgends in der Einrichtung tote Ecken oder Räume ausbilden, weil dort ein partielles Anvulkanisieren des Kautschuks stattfinden würde, wodurch die Mischung verunreinigt und somit unbrauchbar wäre.

Aus der DE-U 88 14 087 ist eine Zahnradpumpe bekannt geworden, bei der die Leckverluste gering gehalten werden sollen, indem die die Wellenzapfen der Zahnräder aufnehmenden Bohrungen in den seitlich anliegenden Dichtplatten außermittig zur Niederdruckseite hin versetzt angeordnet sind. Dadurch soll auf der Hochdruckseite trotz eines kleinen Fußkreisdurchmessers ein genügend großer Dichtbereich verbleiben. Zusätzlich soll die Leckölabführung durch die außermittige Anordnung der Bohrungen verbessert werden.

Es ist die Aufgabe der Erfindung, eine Pumpeneinrichtung zum Erzeugen eines steuerbaren gleichmäßigen Förderdruckes für die Verarbeitung hochviskoser temperaturempfindlicher Materialien, wie z.B. hochviskose Kautschukmischungen aber auch hochviskose thermoplastische Kunststoffe, zu schaffen, bei der keine Abdichtungsprobleme an den radialen Stirnflächen der Förderorgane auftreten.

Durch die beidseitig der Förderorgane wendelförmig eingeformten Materialrückführungskanäle gelingt es, in den Spalt zwischen den Wellenteilen und den Abdichtplatten eingedrungenes Material wieder in den Raum zwischen den einzelnen Zähnen der Förderorgane zurückzufördern. Sollte indessen die Förderleistung der Materialrückführungskanäle nicht ausreichen und trotzdem Material durch diese Spalte eindringen, so wird es in den in die Glockenteile eingebrachten Kammern gesammelt und schließlich durch die Abführkanäle aus der Pumpeneinrichtung herausgeführt. Es wird so sicher vermieden, daß Material in die Wellenlager eindringt und dort Lagerschäden verursacht.

Weiterhin ist es sehr vorteilhaft, daß sowohl die Zähne aufweisenden Förderorgane selbst als auch die Wellenabschnitte aus einem Stück hergestellt werden können, so daß sich eine erhebliche Fertigungsund Montageerleichterung sowie eine bemerkenswerte Kostenersparnis ergibt.

In vorteilhafter Weise kann ein Wellendurchmesser und ein exakt gleicher Fußkreisdurchmesser geschaffen werden, wenn auf dem Wellenteil, der an den Zahnradteil angrenzt, eine Hülse aufgeschrumpft wird.

Für das Herausfräsen der Zähne aus dem Förderorgan ist es erforderlich, daß der angrenzende Wellenteil geringfügig kleiner im Durchmesser bemessen wird. Diese geringfügige Durchmesserreduzierung der Welle ist in sehr vorteilhafter Weise durch eine auf diesen Wellenteilen aufgeschrumpfte Hülse korrigierbar, so daß auch ein sehr geringer radialer Spalt zwischen den Stirnflächen und dem Gehäuse vermieden wird.

Durch die Ausbildung der an den Zahnrädern angrenzenden Wellenteile mit fast gleichem Durchmesser wie der Fußkreisdurchmesser der zahnradähnlichen Förderorgane selbst, können relativ dicke Wellen eingesetzt werden, die höhere Drehmomente übertragen können, was der Verarbeitung hochviskoser Kautschukmischungen sehr entgegenkommt. Dicke Wellen zeigen auch bei hoher Belastung keine Durchbiegung und lassen ohne merkliche Schwächung das Einbringen von Temperierbohrungen zu, so daß weitere Einsätze der Einrichtung für hochtemperaturempfindliche Materialien in vorteilhafter Weise möglich sind. Die durch den Fördervorgang in den Kautschuk eingeleitete Scherenergie kann somit durch ein Kühlmittel in den Temperierbohrungen wieder abgeführt werden.

Ausführungsbeispiele der Erfindung werden in den Zeichnungen dargestellt.

Es zeigen:
- Fig. 1: einen Querschnitt durch die Einrichtung.
- Fig. 2: eine Draufsicht auf einen Längsschnitt der Einrichtung.
- Fig. 3: eine Draufsicht auf einen Längsschnitt einer weiteren Ausführungsform der Einrichtung.

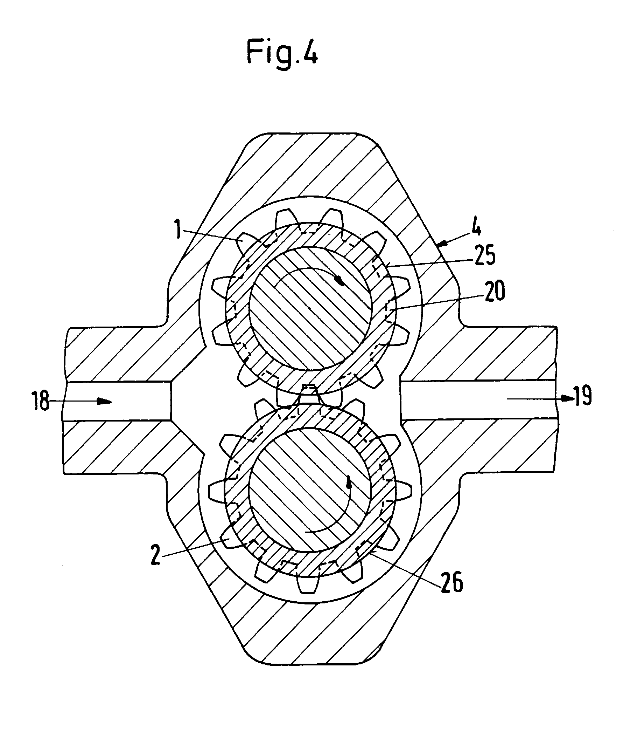

- Fig. 4: einen Querschnitt gemäß IV-IV in Fig. 3.

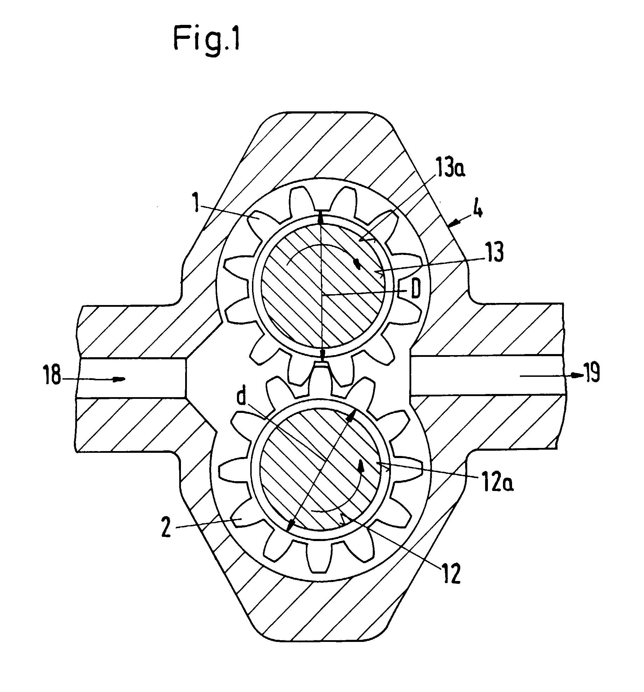

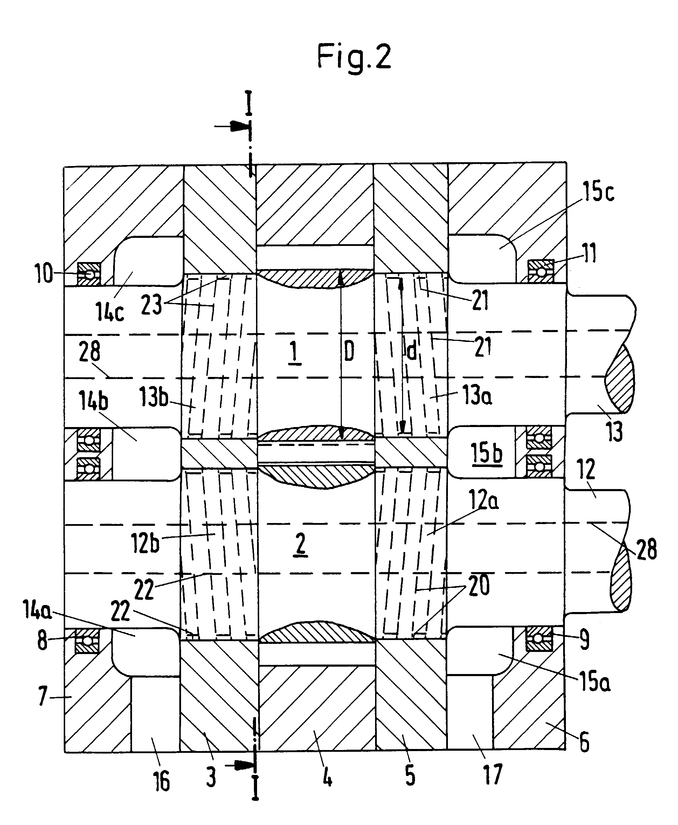

In Fig. 1 (Schnitt gemäß I-I in Fig. 2) werden zwei ein Dichtprofil miteinander bildende Zähne aufweisende Förderorgane 1 und 2 gezeigt, die in einem Gehäuse 4 angeordnet sind. Das Gehäuse 4 weist eine Materialeinlaßöffnung 18 sowie eine Auslaßöffnung 19 auf.

Bei der in Fig. 2 gezeigten Draufsicht, wird durch "D" der Durchmesser des Fußkreises des Förderorganes 1 und durch "d" der Durchmesser der Wellenenden gezeigt.

Die Förderorgane 1 und 2 sind in einem Gehäuse 4 angeordnet, welches auf beiden Seiten durch an dem Gehäuse 4 druckdicht befestigte Abdichtplatten 3 und 5 abgedichtet ist. Die Abdichtplatten 3 und 5 nehmen die Wellenendenteile 12a, 12b und 13a, 13b auf.

An den Abdichtplatten 3 und 5 sind jeweils beidseitig die Lagerplatten 6 und 7 durch nicht gezeigte Verschraubungen befestigt. Die Lagerplatten 6 und 7 nehmen die Lager 8 und 9 für die beiderseitigen Wellenteile 12 und Lager 10 und 11 beiderseitigen Wellenteile 13 auf.

Die Wellenteile 12a, 12b und 13a, 13b weisen darin eingebrachte wendelförmig ausgebildete Rückförderkanälen 20, 21, 22, 23 auf, um in den Spalt zwischen den Wellenteilen 12a, 12b und 13a, 13b und den Abdichtplatten 3 und 5 eingedrungenes Material wieder in den Raum zwischen den einzelnen Zähnen der Förderorgane 1 und 2 zurückzufördern.

Sollte indessen die Förderleistung der Rückfördergewinde nicht ausreichen und trotzdem Material durch diese Spalte dringen, wird es in den Aufnahmekammern 15a, 15b und 15c bzw. am gegenüberliegenden Wellenende in den Aufnahmekammern 14a, 14b und 14c gesammelt.

Das gesammelte Leckagematerial wird durch Abführkanäle 16 und 17 aus der Einrichtung herausgeführt, um zu vermeiden, daß Material in die Wellenlager 8, 9, 10 und 11 eindringt und dort Lagerschäden verursacht. Die Temperierung der Förderorgane 1 und 2 sowie der angrenzenden Wellenteile erfolgt durch Temperierbohrungen 28, an die ein nicht dargestelltes Umlauftemperiergerät anschließbar ist. Eine Temperierung der Förderorgane, d.h. in diesem Fall eine Kühlung, ist von großem Vorteil, weil dann die Förderleistung für hochviskose Kautschuke erheblich gesteigert werden kann, ohne daß eine punktuelle Anvulkanisation auftritt.

Bei den erfindungsgemäßen Förderorganen 1 und 2 wird eine axiale Abdichtung der Wellenteile 12a, 12b und 13a, 13b durch die Rückfördergewinde 20, 21, 22 und 23 gewährleistet.

Die radiale äußerst schwierig darzustellende Abdichtung wird auf eine sehr einfache Weise vermieden. Durch die Ausbildung der Wellenteile 12a, 12b und 13a, 13b mit einem Durchmesser d der etwa dem Fußkreisdurchmesser D der Förderorgane 1 und 2 entspricht entfällt eine Abdichtung an diesen Stellen, weil die kritischen Stirnflächen selbst vermieden werden.

Die Herstellung der Zähne aufweisenden Förderorgane 1 und 2 aus einem Stück mit den angeformten Wellenteilen 12, 12a und 12b sowie 13, 13a und 13b ist sehr vorteilhaft.

Durch das Aufschrumpfen von Hülsen 24, 25, 26 und 27 auf die Wellenteile 12a und 13a werden Durchmesser der Wellenteile erhalten, die exakt dem Durchmesser des Fußkreises D entsprechen oder auch größer sein können als der Durchmesser D des Fußkreises der Förderorgane 1 und 2, so daß jegliche radiale Abdichtungsprobleme vermieden werden.

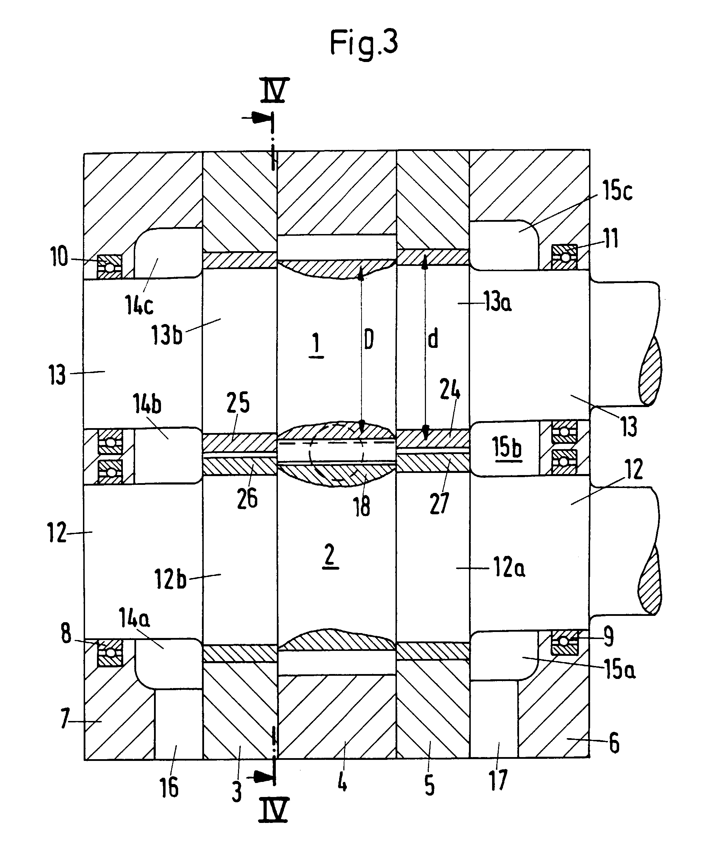

Aus Fig. 3 ist erkennbar, daß der Durchmesser d geringfügig größer ist als der Durchmesser D des Fußkreises. Abdichtungsprobleme und ein Anvulkanisieren von Kautschuk durch eine erhöhte Einleitung von Scherenergie entfallen somit.

### Bezugszeichenliste:

- D =: Fußkreisdurchmesser
- d =: Wellendurchmesser
- 1a =: Zahnrad
- 1 b =: Zahnrad
- 2 =: Gehäuse
- 3 =: Abdichtplatte
- 4 =: Förderraumgehäuse
- 5 =: Abdichtplatte
- 6 =: Lagerplatte (Glockenteil)
- 7 =: Lagerplatte (Glockenteil)
- 8 =: Lager (Wälzlager)
- 9 =: Lager (Wälzlager)
- 10 =: Lager
- 11 =: Lager
- 12 =: Wellenteil
- 12a =: Wellenteil
- 12b =: Wellenteil
- 13 =: Wellenteil
- 13a =: Wellenteil
- 13b =: Wellenteil
- 14a =: Aufnahmekammer für Leckagematerial
- 14b =: Aufnahmekammer für Leckagematerial
- 14c =: Aufnahmekammer für Leckagematerial
- 15a =: Aufnahmekammer für Leckagematerial
- l5b =: Aufnahmekammer für Leckagematerial
- 15c =: Aufnahmekammer für Leckagematerial
- 16 =: Abführkanäle für Leckagematerial
- 17 =: Abführkanäle für Leckagematerial
- 18 =: Einlaßöffnung
- 19 =: Auslaßöffnung
- 20 =: Rückfördergewinde
- 21 =: Rückfördergewinde
- 22 =: Rückfördergewinde
- 23 =: Rückfördergewinde
- 24 =: Hülse
- 25 =: Hülse
- 26 =: Hülse
- 27 =: Hülse
- 28 =: Temperierbohrungen

## Patentansprüche

1. Pumpeneinrichtung zum Erzeugen eines steuerbaren gleichmäßigen Förderdruckes für die Verarbeitung von hochviskosem Kautschuk oder thermoplastischem Kunststoff, bestehend aus zwei, ein zahnartiges Dichtprofil bildenden, auf beidseitigen Wellenteilen (12, 13) in einem Gehäuse (4) gelagerten Förderorganen (1, 2), wobei das Gehäuse (4) eine Einlaß- und eine Auslaßöffnung (18, 19) für das zu fördernde Material aufweist, das Gehäuse (4) durch eine die Förderorgane (1, 2) aufnehmende Platte gebildet wird, und der Fußkreisdurchmesser (D), der das zahnartige Dichtprofil bildenden Förderorgane (1, 2) etwa dem Durchmesser (d) der axial beidseitig an den Förderorganen (1, 2) angrenzenden, die Führung der Förderorgane (1, 2) übernehmenden Wellenteile (12a, 12b, 13a, 13b) entspricht,
**dadurch gekennzeichnet**,
daß das Gehäuse (4) durch beidseitig daran angrenzende, die Wellenteile (12, 13) aufnehmende Abdichtplatten (3, 5) und durch beidseitig an die Abdichtplatten (3, 5) angrenzende, das Gehäuse (4) abschließende und die Lagerung der Wellenteile (12, 13) aufnehmende Glockenteile (6, 7) gebildet wird, und
daß die Förderorgane (1,2) mit ihren beidseitigen Wellenteilen (12,13) in dem Gehäuse (4) gelagert und allein oder gemeinsam antreiblar ausgebildet sind,
daß in den Wellenteilen (12a, 12b, 13a, 13b) wendelförmig eingeformte Materialrückführungskanäle (20, 21, 22, 23) eingebracht sind, die mit das Leckagematerial aufnehmende, in Glockenteilen (6, 7) eingebrachte Kammern (14a, 14b, 15a, 15b) in Verbindung stehen, und wobei an die Kammern (14a, 14b, 15a, 15b) Abführkanäle (16, 17) angeschlossen sind.

2. Pumpeneinrichtung nach Anspruch 1, wobei mindestens eines der Förderorgan (1, 2) und die Wellenenden (12, 12a, 12b) mit den Wellenenden (13, 13a, 13b) aus einem Stück hergestellt wird.

3. Pumpeneinrichtung nach Anspruch 1 oder 2, wobei der Durchmesser der Wellenteile (12a, 12b, 13a, 13b) durch aufgesetzte Hülsen (24, 25, 26, 27) gleich oder geringfügig größer ausgebildet ist als der Fußkreisdurchmesser (D) der Förderorgane.

4. Pumpeneinrichtung nach Anspruch 3, wobei die Hülsen (24, 25, 26, 27) auf die Wellenteile aufgeschrumpft sind.

5. Pumpeneinrichtung nach einem der Ansprüche 1 bis 4, wobei die Wellenteile (12, 12a, 12b, 13, 13a, 13b) sowie die Förderorgane (1, 2) Temperierbohrungen (28) aufweisen.

## Claims

1. A pumping device for producing a controllable, uniform conveying pressure to process highly viscous rubber or thermoplastics, consisting of two conveying elements (1, 2) that form a toothlike sealing profile on either side of the shafts and that are fixed thereupon in a housing 4 which is provided with an outlet and an inlet opening (18, 19) for the material to be conveyed; the housing (4) consisting of a base taking the conveying elements (1, 2) and the root diameter (D) of the conveying elements (1, 2) that form the toothlike sealing profile and more or less corresponds to the diameter (d) of the shaft sections (12a, 12b, 13b, 13b) that axially adjoin the conveying elements on both sides and serve to guide the conveying elements.
"**characterized in that**
The conveying elements (1, 2) are arranged in the housing (4) with their shaft sections (12, 13) on either side and that all of them can be driven either individually or in common; the helically designed material return channels (20, 21, 22, 23) are arranged in the shaft sections (12a, 12 b, 13a, 13b); the chambers (14a, 14b, 15a, 15b), arranged in the bellt-type sections (6, 7) to take the leakage material, are connected, whereby discharge channels (16, 17) are connected to the chambers (14a, 14b, 15a, 15b).

2. A pumping device as recited in claim 1,
**characterized in that**
the conveying element (1) and at least one of the conveying elements (1, 2) and the shaft ends (12, 12a, 12b) with the shaft ends (13, 13a, 13b) are manufactured out of one piece.

3. A pumping device as recited in claim 1 or 2,
**characterized in that**
the diameter of the shaft sections (12a, 12b, 13a, 13b) is of the same size as or slightly larger than the root diameter (D) of the conveying elements due to the shrunk-on sleeves (24, 25, 26, 27).

4. A pumping device as recited in claim 3,
**characterized in that**
sleeves (24, 25, 26, 27) are shrunk onto the shaft sections
the housing (4) is formed by shaft sections (12, 13) adjacent on either side and taking the sealing plates (3, 5) and by bell-type sections (6, 7) which are adjacent on either side to the sealing plates (3, 5) and which occlude the housing (4) and bear the shaft sections (12, 13), and

5. A pumping device as recited in claim 1 to 4,
**characterized in that**
the shaft sections (12, 12a, 12b, 13, 13a, 13b) as well as the conveying elements (1, 2) are provided with heating/cooling bores (28).

## Revendications

1. Un dispositif de pompe pour l'établissement d'une pression de transport homogène et dirigible pour la transformation de caoutchouc de haute viscosité ou de la matière thermoplastique, composé de deux organes de transport (1, 2) formant un profil d'étanchéité dentiforme et logés des deux côtés sur des éléments d'arbre (12, 13) dans un carter (4), le carter (4) étant muni d'une ouverture d'entrée et d'une ouverture de sortie (18, 19) pour la matière à transporter, le carter (4) étant formé par une plaque qui reçoit les organes de transport (1, 2), et le diamètre de cercle du pied (D) des organes de transport (1, 2), qui forment le profil d'étanchéité dentiforme, correspondant approximativement au diamètre (d) des éléments d'arbre (12a, 12b, 13a, 13b) avoisinant axialement des deux côtés les organes de transport (1, 2) et assurant le guidage des organes de transport (1, 2),
charactérisé en ce que
- le carter (4) est formé par des plaques d'étanchéité (3, 5) s'y avoisinant des deux côtés et recevant les éléments d'arbre (12, 13) ainsi que par des éléments en forme de cloche (6, 7), avoisinant des deux côtés les plaques d'étanchéité (3, 5), fermant le carter (4) et recevant le logement des éléments d'arbre (12, 13), et
- les organes de transport (1, 2) avec ses éléments d'arbre des deux côtés (12, 13) sont logés dans le carter (4) et conçus à être entraînés séparemment ou en commun,
- des canaux de refoulement de matière (20, 21, 22, 23) moulés sous forme hélicoïdale sont intégrés dans les éléments d'arbre (12a, 12b, 13a, 13b), qui sont suivis par des chambres (14a, 14b, 15a, 15b) intégrés dans des éléments en forme de cloche (6, 7) et recevant la matière de fuite, et les canaux de fuite (16, 17) étant connectés aux chambres (14a, 14b, 15a, 15b).

2. Dispositif de pompage selon la revendication 1, pour le moins un de ces organes de transport (1, 2) ainsi que les extrémités d'arbre (12, 12a, 12b) étant fabriqués avec les extrémités d'arbre (13, 13a, 13b) d'une seule pièce.

3. Dispositif de pompage selon la revendication 1 ou 2, le diamètre des éléments d'arbre (12a, 12b, 13a, 13b) étant conçu par des douilles montées (24, 25, 26, 27) égal ou légèrement supérieur au diamètre de cercle du pied (D) des organes de transport.

4. Dispositif de pompage selon la revendication 3, les douilles (24, 25, 26, 27) étant posées à chaud sur les éléments d'arbre.

5. Dispositif de pompage selon une des revendications 1 à 4, les éléments d'arbre (12, 12a, 12b, 13, 13a, 13b) ainsi que les organes de transport (1, 2) présentant des alésages de thermorégulation (28).
